# EUROPÄISCHE PATENTANMELDUNG

(11) **EP 4 421 375 A1**
(43) Veröffentlichungstag der Anmeldung: **28.08.2024**
(21) Anmeldenummer: 23169945.5
(22) Anmeldetag: 26.04.2023
(51) Int. Cl.: F17C 5/06

(54) **SCHNITTSTELLENEINRICHTUNG**

(30) Priorität: 24.02.2023 DE 102023104600
(71) Anmelder: Liebherr-Werk Bischofshofen GmbH, 5500 Bischofshofen (AT)
(72) Erfinder: Dengg, Reinhard, 5580 Tamsweg (AT); Heugenhauser, Gerald, 5622 Goldegg (AT); Knapp, Hans, 5500 Bischofshofen (AT); Adler, Robert, 1030 Wien (AT); Gruber, Stephan, 1030 Wien (AT); Nagl, Christoph, 1030 Wien (AT); Rasch, Markus, 1030 Wien (AT); Stephan, Markus, 1030 Wien (AT)
(74) Vertreter: Herrmann, Uwe

(57) **Zusammenfassung**

Die vorliegende Erfindung betrifft eine Schnittstelleneinrichtung (20), die einerseits mit einer zu betankenden Baumaschine (10) und andererseits mit einer vorzugsweise mobilen Wasserstofftankstelle (30) in Verbindung steht oder verbindbar ist oder einen Bestandteil davon bildet, wobei die Schnittstelleneinrichtung ein Antriebsaggregat oder einen Leistungsaufnehmer aufweist, die ausgebildet sind, die Antriebsleistung zur Übertragung von Wasserstoff von der Wasserstofftankstelle an die zu betankende Baumaschine bereitzustellen und wobei die Schnittstelleinrichtung durch die zu betankende Baumaschine und/oder die vorzugsweise mobile Wasserstofftankstelle und/oder ein Spenderaggregat gebildet wird, das ausgebildet ist, die vorzugsweise mobile Wasserstofftankstelle und/oder die Baumaschine mit Antriebsleitung zu versorgen.

## Beschreibung

Die vorliegende Erfindung betrifft eine Schnittstelleneinrichtung, die ausgebildet ist, ein Fahrzeug, insbesondere eine Baumaschine von einer vorzugsweise mobilen Tankstelle mit Wasserstoff zu betanken

Große Baumaschinen werden zum Teil ortsfest und abseits von Energie- und Betankungsinfrastruktur in der Materialgewinnung betrieben.

Anders als Radfahrzeugen wie z.B. Radladern oder Muldenkippern, bei denen es noch möglich ist, eine ortsfeste Tankstelle anzufahren, sind große Baumaschinen, wie Kettenfahrzeuge, z.B. Raupenbagger oder Planierraupen in Ihrem Aktionsradius ganz stark eingeschränkt. Daher ist es üblich, diese Maschinen mit einer vorzugsweise mobilen Tankstelle mit Kraftstoff zu versorgen, bei dem es sich heute üblicherweise um Dieselkraftstoff handelt, der unter Einhaltung von Gefahrenguttransportvorschriften mittels Transportfahrzeugen in einem geeigneten Behälter von einer Tankstelle zu den genannten Baumaschinen transportiert wird.

Der Energiebedarf für das Pumpen des Dieselkraftstoffes von der vorzugsweise mobilen Tankstelle, d.h. von dem vorzugsweise mobilen Transportbehälter in den Baumaschinentank ist vergleichsweise gering und wird üblicherweise entweder durch eine eigene Batterie oder die Batterie des Transportfahrzeuges für den Dieselkraftstoff bereitgestellt. Alternativ kann die zu betankende Baumaschine über eine Fremdbetankungspumpe verfügen, um den Dieselkraftstoff aus dem vom Transportfahrzeug angelieferten Transportbehälter zu saugen.

Sehr viel schwieriger gestaltet sich die Situation, wenn es sich bei dem Kraftstoff nicht um Dieselkraftstoff, sondern um Wasserstoff, wie z.B. Druckwasserstoff handelt.

Zum einen sind beim Betanken einer mit Druckwasserstoff angetriebenen Baumaschine der Leistungs- und Energiebedarf deutlich höher als bei einer Dieseltankstelle, um den Kraftstoff über eine vorzugsweise mobile Wasserstofftankstelle in den Fahrzeugtank zu leiten. Zum anderen kommt erschwerend hinzu, dass an den Standorten der ortsfest betriebenen Baumaschinen zumeist kein Energieversorgungsnetz vorhanden ist, um die Wasserstofftankstelle bzw. deren Verdichter bspw. mit elektrischer Leistung antreiben und den verdichteten Wasserstoff kühlen zu können.

Die heute verfügbare übliche vorzugsweise mobile Betankungslösung für wasserstoffbetriebe Fahrzeuge besteht in dem bloßen Überströmen von Wasserstoff, bei dem mit geringem lokalen Energiebedarf bereits andernorts verdichteter Druckwasserstoff aus einem Transportbehälter in die Fahrzeugtanks der ortsfest betriebenen Baumaschine geleitet, so lange, bis Druckausgleich zwischen Transportbehälter und Fahrzeugtank erfolgt ist. Diese Lösung zeichnet sich konzeptbedingt durch geringe Abgabemengen und geringe Füllgrade auf der Fahrzeugseite aus, worunter die Reichweite leidet. Die Überströmlösung ist daher zwar für Versuchszwecke und Probebetrieb grundsätzlich gut geeignet, nicht jedoch als serientaugliche Lösung für energieintensive Baumaschineneinsätze.

Der vorliegenden Erfindung liegt somit die Aufgabe zugrunde, eine Betankungslösung für Baumaschinen bereitzustellen, mit der auch ortsfest betriebene oder in ihrem Aktionsradius stark eingeschränkte Baumaschinen mit einer hinreichenden Menge an Wasserstoff aus einer vorzugsweise mobilen Wasserstofftankstelle befüllt werden können.

Diese Aufgabe wird durch eine Schnittstelleneinrichtung bereitgestellt, die einerseits mit der zu betankenden Baumaschine und andererseits mit der vorzugsweise mobilen Wasserstofftankstelle in Verbindung steht oder verbindbar ist oder einen Bestandteil davon bildet, wobei die Schnittstelleneinrichtung ein Antriebsaggregat oder einen Leistungsaufnehmer aufweist, die ausgebildet sind, die Antriebsleistung zur Übertragung von Wasserstoff von der Wasserstofftankstelle an die zu betankende Baumaschine bereitzustellen und wobei die Schnittstelleinrichtung durch die zu betankende Baumaschine und/oder die vorzugsweise mobile Wasserstofftankstelle und/oder ein Spenderaggregat, insbesondere -fahrzeug gebildet wird, das ausgebildet ist, die vorzugsweise mobile Wasserstofftankstelle und/oder die Baumaschine mit Antriebsleitung zu versorgen.

Die Wasserstofftankstelle ist vorzugsweise mobil und kann beispielsweise ein Fahrzeug mit einem oder mehreren Wasserstofftanks darstellen. Von der Erfindung ist aber auch eine ortsfeste Wasserstofftankstelle umfasst.

Die Schnittstelleneinrichtung kann durch das zu betankende Fahrzeug bzw. Baumaschine, durch die die Tankstelle, durch beide oder Teile von diesen gebildet werden. Sie kann auch weder durch das zu betankende Fahrzeug bzw. die Baumaschine bzw. ein Teil von dieser gebildet werden, sondern durch ein externes Aggregat, das vorzugsweise als Fahrzeug ausgeführt ist.

Bei der Antriebsleistung kann es sich beispielsweise um elektrische, hydraulische, pneumatische oder mechanische Leistung oder um eine Kombination von zwei oder mehr dieser Leistungsarten handeln.

Das Antriebsaggregat kann ausgebildet sein, die Antriebsleitung mittels hydraulischer Leistung, elektrischer Leistung, pneumatischer Leistung oder mechanischer Leistung bereitzustellen. Auch ist es denkbar, dass ein Leistungsaufnehmer vorhanden ist, der Energie von einer externen Energiequelle aufnimmt, wie z.B. von einem Elektrizitätsnetz und diese Leistung ggf. nach einer Transformation auf ein anderes Spannungsniveau dann zum Wasserstofftransfer bereitstellt.

Die vorliegende Erfindung einer Betankungsschnittstelle löst das Problem des oben beschriebenen Engpasses bei der Antriebsleistungsversorgung einer vorzugsweise mobilen Wasserstofftankstelle an abgelegene Einsatzorten, indem die Energieversorgung für die vorzugsweise mobile Wasserstofftankstelle nicht durch einen lokal verfügbaren großen Stromanschluss bereitgestellt wird, sondern durch ein Fahrzeug bzw. durch eine Baumaschine, wobei es sich bei dem Fahrzeug um das zu betankende Fahrzeug handeln kann und/oder um das Transportfahrzeug mit dem oder den Wasserstoff-Transportbehältern handeln kann und/oder um ein Spenderfahrzeug handeln kann, welches die vorzugsweise mobile Wasserstofftankstelle antreibt, sodass ggf. auch das hintereinander erfolgende Betanken mehrere Fahrzeuge am Stück deutlich schneller erfolgen kann.

Die Antriebsleistung der Schnittstelleneinrichtung, welche von einem der zuvor beschriebenen Fahrzeuge bzw. Aggregate bereitgestellt wird, kann mittels hydraulischer Leistung erfolgen bzw. erzeugt werden, z.B. bereitgestellt von einem separaten Hydraulikölkreislauf oder Fahrzeughydraulik und Betankung teilen sich einen gemeinsamen Ölkreislauf.

Anstelle und zusätzlich zu hydraulischer Leistung ist auch der Einsatz elektrischer Leistung möglich, falls das Fahrzeug über größere elektrische Antriebe verfügt (z. B. ein Brennstoffzellenfahrzeug), z.B. durch Hochvoltantriebe.

Anstelle und zusätzlich zu den beiden vorgenannten Leistungsquellen kommt auch die pneumatische und/oder mechanische Leistungserzeugung in Frage.

Alternativ kann die Antriebsleistung für die vorzugsweise mobile Tankstelle aber auch von einer anderen Leistungsquelle kommen, bspw. dem Elektrizitätsnetz.

In einer Ausführungsform kann die Schnittstelleneinrichtung ausgebildet sein, die Steuerleistung bereitzustellen, die benötigt ist, um den Betankungsvorgang zu steuern. Dabei kann es sich Für den Betrieb der Tankstellensteuerung um Steuerungsleistung in Form von elektrischer Leistung im Niedervoltbereich, typischerweise 12 V, 24 V oder auch 48 V handeln. Diese kann z.B. von dem Niedervoltbordnetz von einem der oben genannten Fahrzeuge, ggf. mit einem Gleichstromsteller (DC-DC Wandler) auf der Tankstellenseite bereitgestellt werden, im Falle der Variante mit elektrischer Antriebsleistung aus der Hochvoltversorgung mit einem Gleichstromsteller auf der Tankstellenseite.

In einer weiteren vorteilhaften Ausführung weist die Schnittstelleneinrichtung eine Übertragungseinrichtung von Informationen (mit hoher Steuerungsgüte) zwischen der vorzugsweise mobilen Tankstelle und dem zu betankenden Fahrzeug auf, aber auch zu bzw. vom dem ggf. vorhandenen separaten, die Antriebsleistung bereitstellenden Fahrzeug:
Diese Übertragungseinrichtung kann über Mittel zur kontaktlosen Datenübertragung in beide Richtungen (bspw. NFC Schnittstelle) verfügen. In Betracht kommt jedoch auch eine Datenkommunikation mittels Kabel und Steckverbinder etc.

In einer weiteren Ausführungsform beinhaltet die Schnittstelleneinrichtung ein oder mehrere Bauteile zum Sicherstellen von grundlegenden Sicherheitsanforderungen wie zum Beispiel eines oder mehrere der folgenden:
- Erdung / Potentialausgleich
- Blitzschutz
- Pilotkontakte v. A. im Falle von elektrischer Leistungsbereitstellung
- Verriegelungsvorrichtungen mit entsprechenden Schutzeinrichtungen

In einer bevorzugten Ausgestaltung der Erfindung ist die Schnittstelleneinrichtung ausgebildet, den Wasserstoff zwischen der vorzugsweise mobilen Tankstelle und dem Fahrzeug bzw. der Baumaschine in Form von Druckwasserstoff zu übertragen.

Weiterhin ist es denkbar, über die Schnittstelle zwischen vorzugsweise mobiler Tankstelle und dem die Antriebsleistung bereitstellenden Fahrzeug das Reaktionswasser gezielt aufzufangen und einem Sammelbehälter zuzuführen, falls es sich bei dem die Antriebsleistung bereitstellenden Fahrzeug um ein Brennstoffzellenfahrzeug handelt.

Für das Betanken sehr großer Maschinen mit Füllmengen jenseits der 50 kg Druckwasserstoff kann es von Vorteil sein, die Wasserstofftanks der Baumaschine über mehrere vorzugsweise mobile Tankstellen parallel zu betanken. Somit kann die Schnittstelle ausgeführt sein, den oder die Wasserstoffbehälter des zu betankenden Fahrzeuges durch den Parallelbetrieb mehrerer Wasserstofftankstellen gleichzeitig zu befüllen, wozu die Schnittstelleinreichung entsprechende Ein- und Auslassanschlüsse aufweist.

Es können Mittel zum automatischen Aktivieren der Parkbremse vorhanden sein, die mit dem Verbinden des zu betankenden Fahrzeugen und der vorzugsweise mobilen Wasserstofftankstelle über die Betankungsschnittstelle wird auf Seiten der Fahrzeuge die Parkbremse automatisch aktiviert, um das ungewollte Anfahren der Fahrzeuge unterbinden zu können.

Die vorliegende Erfindung betrifft auch ein System umfassend eine Schnittstelleneinrichtung gemäß der vorliegenden Erfindung sowie ein oder mehrere damit in Verbindung stehende zu betankende Fahrzeuge und/oder vorzugsweise mobile Wasserstofftankstellen.

Der Begriff "Baumaschine" umfasst jede beliebige ortsfeste oder mobile Arbeitsmaschine, wie Erdbeweger, Raupen, Bagger etc.

Unter dem Begriff "in Verbindung stehende" ist zu verstehen, dass die Schnittstelleinrichtung jedenfalls geeignet ist, Wasserstoff von dem oder den vorzugsweise mobilen Wasserstofftankstellen an das oder die Baumaschinen zu übertragen und ggf. zusätzlich die elektrische Steuerungsleistung für den Betankungsvorgang bereitzustellen und/oder die Datenkommunikation zwischen einem oder mehreren der Kommunikationspartner Schnittstelleneinrichtung, vorzugsweise mobile Tankstelle und zu betankende Baumaschine bereitzustellen.

Die Schnittstelleinrichtung kann vollständig oder teilweise ein Bestandteil des zu betankenden Fahrzeuges und/oder der vorzugsweise mobilen Tankstelle und/oder einer separaten Vorrichtung, insbesondere eines separaten Fahrzeuges sein.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine schematische Ansicht einer Ausführungsform einer erfindungsgemäßen Anordnung, bei der das zu betankende Fahrzeug die vorzugsweise mobile Tankstelle antreibt,
- Fig. 2:: eine schematische Ansicht einer Ausführungsform einer erfindungsgemäßen Anordnung, bei der ein drittes Fahrzeug die vorzugsweise mobile Tankstelle antreibt und
- Fig. 3:: eine schematische Ansicht einer Ausführungsform einer erfindungsgemäßen Anordnung, bei der das Transportfahrzeug für Wasserstoff die vorzugsweise mobile Tankstelle antreibt.

In den Figuren kennzeichnen das Bezugszeichen 10 die zu betankende Baumaschine, wie z.B. einen Raupenbagger, 20 die Schnittstelleneinrichtung und 30 die Tankstelle, aus der Wasserstoff zu der zu betankenden Baumaschine zu übertragen ist.

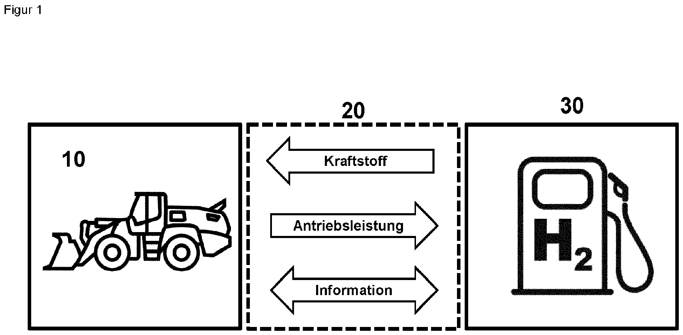

Wie dies aus dem Ausführungsbeispiel in Figur 1 geht, wird in diesem Beispiel die Antriebsleistung, z.B. elektrische Leistung zum Betrieb einer Förderpumpe oder eines Verdichters für Wasserstoff von der von dem zu betankenden Fahrzeug 10 bereitgestellt, das somit die Tankstelle 30 antreibt.

Der Kraftstoff (Wasserstoff) wird daraufhin von der Tankstelle 30 in einen geeigneten Tank des Fahrzeuges 10 überführt.

Die Schnittstelleinrichtung 20 dient weiterhin der bidirektionalen Kommunikation zwischen Fahrzeug 10 und Tankstelle 30, so dass beispielsweise der Füllstand des Tankes im Fahrzeug 10 gemeldet werden kann, so dass bei hinreichender Tankfüllung der Tankvorgang beendet wird.

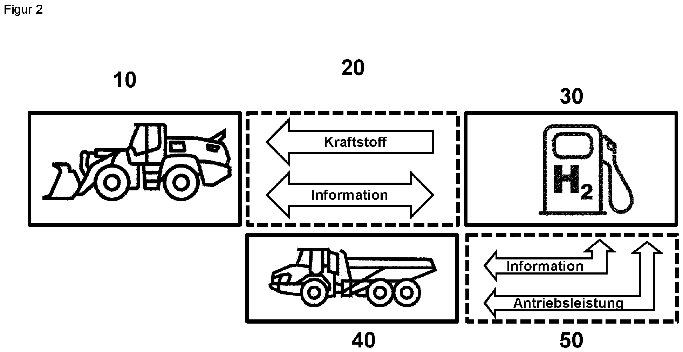

In dem Ausführungsbeispiel in Figur 2 entspricht die Überführung von Wasserstoff sowie die Kommunikation dem Ausführungsbeispiel in Figur 1 mit einer Schnittstelle 20 zwischen Fahrzeug 10 und Tankstelle 30.

Allerdings wird in Figur 2 die Antriebsleistung von einem externen Fahrzeug bzw. Antriebsfahrzeug 40 bereitgestellt. Zwischen diesem und der Tankstelle gibt es eine zweite Schnittstelleneinrichtung 50 zwischen Antriebsfahrzeug 40 und Tankstelle 30, die einen Informationsaustausch zwischen dem Antriebsfahrzeug 40 und der Tankstelle 30 erlaubt.

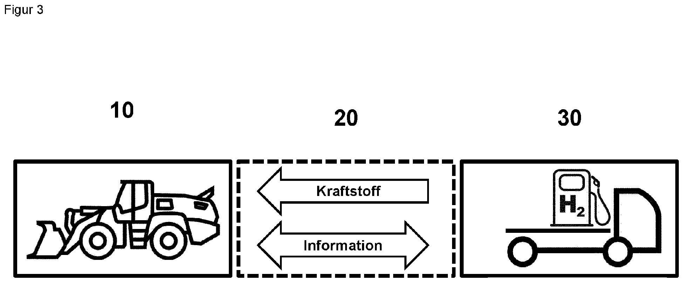

Aus Figur 3 geht ein Beispiel hervor, bei der die Antriebsmittel für die Überführung von Wasserstoff in der mobilen Tankstelle angeordnet sind, d.h. dieses treibt die Tankstelle an. Die Tankstelle 30 ist mit einem Transportzeug verbunden bzw. befindet sich auf diesem.

Die Übertragung von Wasserstoff und der Datenaustausch entsprechen dem Ausführungsbeispiel in Figur 1.

An dieser Stelle wird darauf hingewiesen, dass der Begriff "Tankstelle" jedes System umfasst, wie z.B. einen Behälter, ein Behälterfahrzeug etc. in dem sich Wasserstoff in beliebigem Aggregatzustand befindet.

Bevorzugte, aber nicht beschränkende Ausführungsformen der Erfindung werden im Folgenden beschrieben:
- Schnittstelleneinrichtung zwischen Fahrzeugen und Wasserstofftankstelle für die Betankung von Baumaschinen, welche sich insbesondere für den Betrieb an abgelegenen Einsatzorten ohne Anbindung an ein Energieversorgungsnetz eignet, indem über die Schnittstelleneinrichtung die Antriebsleistung für die vorzugsweise mobile Tankstelle durch ein Fahrzeug bzw. eine Baumaschine in Form von hydraulischer Leistung oder elektrischer Leistung oder pneumatischer Leistung oder mechanischer Leistung bereitgestellt wird, wobei es sich bei dem die Antriebsleistung bereitstellenden Fahrzeug um das zu betankenden Fahrzeug selbst handelt, oder um das den Wasserstoff anliefernde Transportfahrzeug handelt oder um ein anderes Spenderfahrzeug für Antriebsleistung handelt.
- Schnittstelleneinrichtung zwischen Fahrzeugen und Wasserstofftankstelle, wobei zum Zwecke der Leistungsübertragung auf Fahrzeugseite und Tankstelleseite hydraulische Anschlüsse vorgesehen sind und/oder elektrische Anschüsse vorgesehen sind und/oder pneumatische Anschlüsse vorgesehen sind.
- Schnittstelleneinrichtung zwischen Fahrzeugen und Wasserstofftankstelle für das Übertragen von elektrischer Steuerungsleistung für die Energieversorgung des Niedervoltnetzes der Tankstelle mit einer mechanischen Kontaktierung.
- Schnittstelleneinrichtung zwischen zu betankendem Fahrzeug und Wasserstofftankstelle für das Übertragen von Informationen über eine kontaktlose Schnittstelleneinrichtung.
- Schnittstelleneinrichtung zwischen dem die Antriebsleistung bereitstellenden Fahrzeug und der Wasserstofftankstelle für das bidirektionale Übertragen von Informationen über eine kontaktlose Schnittstelleneinrichtung.
- Schnittstelleneinrichtung zwischen Fahrzeugen und Wasserstofftankstelle, wobei es sich anstelle einer kontaktlosen Datenübertragung auch um eine Kabelverbindung mit mechanischer Kontaktierung handeln kann.
- Schnittstelleneinrichtung zwischen Fahrzeugen und Wasserstofftankstelle, wobei diese geeignet es, Daten in beide Richtungen mit hoher Steuerungsgüte übertragen zu können, um diese Daten für Sicherheitsfunktionen auf Fahrzeugseite und/oder Tankstellenseite nutzen zu können.
- Schnittstelleneinrichtung zwischen Fahrzeugen und Wasserstofftankstelle, wobei die Schnittstelleneinrichtung die Verbindung von Fahrzeugen und Tankstelle für Erdung und/oder Potentialausgleich und/oder Blitzschutz erlaubt und über mechanische Kontaktierung verfüg.
- Schnittstelleneinrichtung zwischen Fahrzeugen und Wasserstofftankstelle, welche über Pilotkontakte und/oder im Falle von elektrischer Antriebsleistung über Interlock Kontakte mittels mechanische Kontaktierung verfügt.
- Schnittstelleneinrichtung zwischen Fahrzeugen und Wasserstofftankstelle, welche über eine geeignete manuell betätigte und/oder automatisiert betätigte Verriegelung verfügt.
- Schnittstelleneinrichtung zwischen Fahrzeugen und Wasserstofftankstelle, welche über hydraulische und/oder elektrische und/oder pneumatische Schnellkupplungen verfügen und durch die Fahrzeuge und/oder die Wasserstofftankstelle gesteuert werden.
- Schnittstelleneinrichtung zwischen Fahrzeugen und Wasserstofftankstelle, welche es erlaubt, die Wasserstoffbehälter des zu betankenden Fahrzeuges durch den Parallelbetrieb mehrerer Wasserstofftankstellen gleichzeitig zu befüllen.
- Steuerung(en) auf der Fahrzeugseite, welche mit dem Verbinden der Schnittstelleneinrichtung selbständig das Aktivieren der Parkbremse auslösen, wobei es sich bei den Fahrzeugen um das zu betankende Fahrzeug und/oder das Transportfahrzeug und/der das Spenderfahrzeug handeln kann.
- Schnittstelleneinrichtung zwischen Fahrzeugen und Wasserstofftankstelle, insbesondere geeignet für das Betanken von Baumaschinen, LKW und vorzugsweise mobilem Gerät abseits von stationären Tankstellen, temporären Tankstellen und fernab eines Energieversorgungsnetzes für den Antrieb von konventionellen vorzugsweise mobilen Wasserstofftankstellen.
- Schnittstelleneinrichtung zwischen Fahrzeugen und Wasserstofftankstelle, wobei die zu betankenden Fahrzeuge über einen Brennstoffzellenantrieb oder über einen Wasserstoffhubkolbenmotor verfügen.
- Schnittstelleneinrichtung zwischen einem die Antriebsleistung bereitstellenden Brennstoffzellenfahrzeug und einer Wasserstofftankstelle, dahingehend ausgebildet, dass das Reaktionswasser des Brennstoffzellenantriebes über die Schnittstelleneinrichtung gesammelt und einem Sammelbehälter zugeführt wird.

## Patentansprüche

1. Schnittstelleneinrichtung, die einerseits mit einer zu betankenden Baumaschine und andererseits mit einer vorzugsweise mobilen Wasserstofftankstelle in Verbindung steht oder verbindbar ist oder einen Bestandteil davon bildet, wobei die Schnittstelleneinrichtung ein Antriebsaggregat oder einen Leistungsaufnehmer aufweist, die ausgebildet sind, die Antriebsleistung zur Übertragung von Wasserstoff von der Wasserstofftankstelle an die zu betankende Baumaschine bereitzustellen und wobei die Schnittstelleinrichtung durch die zu betankende Baumaschine und/oder die vorzugsweise mobile Wasserstofftankstelle und/oder ein Spenderaggregat, insbesondere Spenderfahrzeug gebildet wird, das ausgebildet ist, die vorzugsweise mobile Wasserstofftankstelle und/oder die Baumaschine mit Antriebsleitung zu versorgen.

2. Schnittstelleneinrichtung nach Anspruch 1, **dadurch gekennzeichnet, dass** die Schnittstelleneinrichtung ausgebildet ist, elektrische Steuerungsleistung für die Energieversorgung des Stromnetzes der Wasserstofftankstelle bereitzustellen.

3. Schnittstelleneinrichtung nach Anspruch 1 oder 2, **dadurch gekennzeichnet, dass** die Schnittstelleneinrichtung Mittel zum Übertragen von Daten von und/oder zwischen der Baumaschine und/oder der vorzugsweise mobilen Wasserstofftankstelle aufweist.

4. Schnittstelleneinrichtung nach einem der vorhergehenden Ansprüche, **dadurch gekennzeichnet, dass** das Antriebsaggregat ausgebildet ist, die Antriebsleitung mittels hydraulischer Leistung, elektrischer Leistung, pneumatischer Leistung oder mechanischer Leistung bereitzustellen.

5. Schnittstelleneinrichtung nach einem der vorhergehenden Ansprüche, **dadurch gekennzeichnet, dass** die Schnittstelleneinrichtung einen Leistungsaufnehmer aufweist, der ausgebildet ist, Energie von einer externen Energiequelle aufzunehmen und diese Leistung ggf. nach einer Transformation auf ein anderes Spannungsniveau zum Wasserstofftransfer bereitstellt, vorzugsweise wobei die Schnittstelleneinrichtung einen Leistungsaufnehmer aufweist, der ausgebildet ist, elektrische Energie von einer externen Energiequelle aufzunehmen und diese elektrische Leistung ggf. nach einer Transformation auf ein anderes Spannungsniveau zum Wasserstofftransfer bereitstellt.

6. Schnittstelleneinrichtung nach einem der vorhergehenden Ansprüche, **dadurch gekennzeichnet, dass** die Schnittstelleneinrichtung ein oder mehrere Bauteile zum Sicherstellen von Sicherheitsanforderungen beim Übertragen des Wasserstoffs von der vorzugsweise mobilen Wasserstofftankstelle zu dem zu betankenden Baufahrzeug aufweist.

7. Schnittstelleneinrichtung nach einem der vorhergehenden Ansprüche, **dadurch gekennzeichnet, dass** die Schnittstelleinrichtung ausgebildet ist, den Wasserstoff zwischen der vorzugsweise mobilen Wasserstofftankstelle und dem Fahrzeug bzw. der Baumaschine in Form von Druckwasserstoff zu übertragen.

8. Schnittstelleneinrichtung nach einem der vorhergehenden Ansprüche, **dadurch gekennzeichnet, dass** die Schnittstelleinrichtung ausgebildet ist, den oder die Wasserstoffbehälter des zu betankenden Fahrzeuges durch den Parallelbetrieb mehrerer Wasserstofftankstellen gleichzeitig zu befüllen

9. Schnittstelleneinrichtung nach einem der vorhergehenden Ansprüche, **dadurch gekennzeichnet, dass** diese über eine manuell betätigte und/oder automatisiert betätigte Verriegelung verfügt, vorzugsweise über hydraulische und/oder elektrische und/oder pneumatische Schnellkupplungen zum Verbinden von zwei wasserstoffführenden Elementen.

10. Schnittstelleneinrichtung nach einem der vorhergehenden Ansprüche, ferner umfassend ein Mittel zum automatischen Aktivieren der Parkbremse eines mit der Schnittstelleneinrichtung verbundenen Fahrzeugs, um das ungewollte Anfahren des Fahrzeugs unterbinden zu können.

11. System umfassend eine Schnittstelleneinrichtung gemäß der Ansprüche 1 bis 10 sowie ein oder mehrere damit in Verbindung stehende, zu betankende Fahrzeuge sowie vorzugsweise mobile Wasserstofftankstellen.
